Europäisches Patentamt

European Patent Office

Office européen des brevets

(19)

(11) Numéro de publication: **0 066 236**

**A1**

(12) # DEMANDE DE BREVET EUROPEEN

(21) Numéro de dépôt: **82104552.3**

(22) Date de dépôt: **25.05.82**

(51) Int. Cl.³: **C 08 L 23/06**
**F 28 F 21/06**

(30) Priorité: **27.05.81 FR 8110615**

(43) Date de publication de la demande:
**08.12.82 Bulletin 82/49**

(84) Etats contractants désignés:
**BE CH DE FR GB IT LI NL**

(71) Demandeur: **COMPAGNIE GENERALE D'ELECTRICITE**
**Société anonyme dite:**
**54, rue La Boétie**
**F-75382 Paris Cedex 08(FR)**

(72) Inventeur: **Reinaudo, Christian**
**6, rue J.B. Potin**
**F-92170 Vanves(FR)**

(74) Mandataire: **Weinmiller, Jürgen et al,**
**Zeppelinstrasse 63**
**D-8000 München 80(DE)**

(54) **Matériau plastique à conductibilité thermique élevée et bonne résistance mécanique, et procédés de préparation de celui-ci.**

(57) Matériau plastique à conductibilité thermique élevée et bonne résistance mécanique, formé d'une matrice polymère comprenant au moins du polyéthylène et un copolymère éthylène-propylène en proportions relatives de 50 à 80% en poids de polyéthylène pour 20 à 50% en poids de charge conductrice, rapportés au poids de polymère. Sa matrice polymère est réticulée.

EP 0 066 236 A1

Croydon Printing Company Ltd.

Matériau plastique à conductibilité thermique élevée et bonne résistance mécanique, et procédés de préparation de celui-ci

La présente invention concerne un matériau plastique à conductibilité thermique élevée et bonne résistance mécanique, formé d'une matrice polymère comprenant au moins du polyéthylène réticulé, un copolymère éthylène-propylène, et au moins 50% en poids de charge conductrice, rapportés au poids de polymère.

Le document GB-A-1 294 665 décrit un matériau plastique conducteur de l'électricité, contenant au moins 10% en poids d'un homo ou copolymère de l'éthylène, au moins 16,6% en poids d'un caoutchouc synthétique tel qu'un copolymère éthylène-propylène, et au moins 40% en poids d'une charge conductrice telle que du noir de carbone. Sa conductibilité thermique n'est pas indiquée.

L'on recherche en vue d'applications à la fabrication de convecteurs d'échange de chaleur ou d'échangeurs de récupération industrielle de chaleur un matériau plastique de conductibilité thermique élevée et présentant d'excellentes propriétés mécaniques à haute température.

La présente invention a pour but de procurer un matériau plastique de conductibilité thermique très élevée mais présentant aussi de très bonnes propriétés mécaniques à haute température.

Le matériau plastique selon l'invention est caractérisé en ce que sa matrice polymère contient de 50 à 80% en poids de polyéthylène et 20 à 50% en poids de copolymère éthylène-propylène. De préférence, il comprend en proportions pondérales environ 50 parties de polyéthylène, 50 parties de copolymère éthylène-propylène et 75 parties de noir de carbone de surface spécifique au moins 100 $m^2$/g.

Un premier procédé de fabrication du matériau plastique ci-dessus défini consiste à incorporer par malaxage au copolymère éthylène-propylène le polyéthylène sous forme de poudre, additionné d'un agent de réticulation, à une température inférieure à sa température de fusion.

Un deuxième procédé de fabrication du matériau consiste à incorporer par malaxage au copolymère éthylène-propylène le polyéthylène, à une température d'environ 160°C, en l'absence d'agent de réticulation ou de vulcanisation, à laisser le mélange se refroidir à environ 140°C, et à lui ajouter simultanément un agent de vulcanisation du copolymère et un agent de réticulation du polyéthylène, tout en continuant le malaxage.

Il est décrit ci-après à titre d'exemples des procédés de fabrication du matériau selon l'invention.

On introduit dans un mélangeur porté à 100°C, 50 parties en poids de copolymère éthylène-propylène, tel que celui commercialisé par la société Esso sous la marque Vistalon 3708.

On lui ajoute à titre d'agent anti-oxydant une petite quantité d'un mélange de polyphénol alcoylé tétrakis [méthylène-3 (3', 5'-di-t-butyl-4' hydroxyphényl propionate] méthane, vendu sous la désignation commerciale Irganox 1010 par la société Ciba-Geigy, et de distéarylthio-dipropionate, vendu sous la désignation commerciale Irganox PS802 par la même société. On ajoute alors 50 parties en poids de poudre de polyéthylène haute densité, tel que celui commercialisé sous la désignation Hostalen GM par la société Hoechst, additionnée de 2%, rapportés au poids de polyéthylène, de peroxyde de dicumyle, formant agent de réticulation. On poursuit le mélange pendant 10 minutes. On porte alors le mélange homogène dans une presse chauffée à 180°C, et l'y maintient pendant 20 minutes, au cours desquelles s'effectue la réticulation des polymères.

Il faut observer à ce propos que l'on pourrait également utiliser une poudre de polyéthylène basse densité, qui donnerait un matériau sensiblement de la même qualité. De même, le peroxyde de dicumyle pourrait être remplacé par un autre peroxyde organique, notamment le peroxyde de di-t-butyle.

Après réticulation du mélange des deux polymères, on leur ajoute en plusieurs fois dans un mélangeur 75 parties en poids du noir de carbone vendu sous la désignation Vulcan XC72 par la société Cabot, de surface spécifique 254 $m^2$/g et de dimension moyenne de particule 0,03 microns, dont les agrégats de particules sont groupés en forme d'aiguilles. Lorsque la charge est bien mélangée à la matrice polymère, on peut retirer le matériau du mélangeur et le laisser se solidifier. Il possède de bonnes propriétés mécaniques, une bonne résistance au veillissement et une conductibilité thermique d'environ 0,6 W/m-d°K. Il peut être mis en forme de pièces profilées par extrusion.

On peut éventuellement ajouter aux polymères des adjuvants facilitant leur mise en oeuvre dans les malaxeurs, par exemple des polyesters qui rendraient la matrice polymère plus fluide.

Selon le deuxième procédé défini ci-dessus, on effectue le mélange à 160°C des mêmes polymères, mais sans agent de réticulation. Le mélange étant bien homogène, on le laisse se refroidir à 140°C, puis on introduit simultanément dans le mélangeur 5% en poids de soufre, rapportés au poids de copolymère éthylène-propylène, formant agent de vulcanisation de celui-ci, et 2% en poids de peroxyde de dicumyle, rapportés au poids de polyéthylène, formant agent de réticulation de ce dernier, et on poursuit le malaxage à cette température pendant 10mn. On laisse alors le mélange se solidifier.

On peut également, après avoir convenablement mélangé le copolymère éthylène-propylène et le polyéthylène, soumettre le mélange au rayonnement d'un accélérateur d'électrons jusqu'à une dose de 15M rad, de façon à assurer sa réticulation.

Quel que soit le procédé de fabrication employé les conditions opératoires sont choisies de façon à obtenir une interpénétration des réseaux réticulés des deux polymères, ce qui assure les propriétés mécaniques optimales du matériau.

Le matériau de l'invention peut servir à la fabrication de convecteurs d'échange de chaleur à air ou d'échangeurs eau chaude-air pour appartements, à celles d'échangeurs de récupération industrielle de chaleur, et à l'encapsulation de matrices de stockage de chaleur .

REVENDICATIONS

1/ Matériau plastique à conductibilité thermique élevée et bonne résistance mécanique, formé d'une matrice polymère comprenant du polyéthylène réticulé, un copolymère éthylène-propylène, et d'au moins 50% en poids de charge conductrice, rapportés au poids de polymère, caractérisé en ce que la matrice polymère contient de 50 à 80% en poids de polyéthylène et 20 à 50% en poids de copolymère éthylène-propylène.

2/ Matériau plastique selon la revendication 1, caractérisé en ce qu'il comprend en proportions pondérales environ 50 parties de polyéthylène, 50 parties de copolymère éthylène-propylène et 75 parties de noir de carbone de surface spécifique au moins 100 $m^2$/g.

3/ Procédé de fabrication de matériau plastique selon la revendication 1, caractérisé en ce que l'on incorpore par malaxage au copolymère éthylène-propylène le polyéthylène sous forme de poudre, additionné d'un agent de réticulation, à une température inférieure à sa température de fusion.

4/ Procédé de fabrication du matériau plastique selon la revendication 1, caractérisé en ce que l'on incorpore par malaxage au copolymère éthylène-propylène le polyéthylène à une température d'environ 160°C, puis en ce que l'on laisse le mélange se refroidir vers 140°C et lui ajoute simultanément à cette température un agent de vulcanisation du copolymère et un agent de réticulation de polyéthylène, tout en continuant le malaxage.

Office européen
des brevets

**RAPPORT DE RECHERCHE EUROPEENNE**

Numéro de la demande

EP 82 10 4552

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | FR-A-2 459 815 (COMPAGNIE GENERALE D'ELECTRICITE) *Revendication 1* | 1-4 | C 08 L 23/06 F 28 F 21/06 |
| | --- | | |
| D,Y | GB-A-1 294 665 (RAYCHEM) *Page 1, ligne 12 - page 2, ligne 99* | 1-4 | |
| | --- | | |
| A | GB-A-1 359 173 (UNION CARBIDE) *Revendication 1* | 1 | |
| | ----- | | |

**DOMAINES TECHNIQUES RECHERCHES (Int. Cl. 3)**

F 28 F
C 08 L

Le présent rapport de recherche a été établi pour toutes les revendications

| Lieu de la recherche | Date d'achèvement de la recherche | Examinateur |
|---|---|---|
| LA HAYE | 10-09-1982 | GOOVAERTS R.E. |